# EUROPEAN PATENT SPECIFICATION

(11) **EP 3 484 107 B1**
(45) Date of publication and mention of the grant of the patent: **24.03.2021**
(21) Application number: 17854740.2
(22) Date of filing: 20.09.2017
(51) Int. Cl.: H04L 12/707, H04L 12/745, H04L 12/701, H04L 12/703, H04L 12/753

(54) **PARAMETER NOTIFICATION AND OBTAINING METHODS AND DEVICES, AND STORAGE MEDIUM**
PARAMETERBENACHRICHTIGUNGS- UND -GEWINNUNGSVERFAHREN UND -VORRICHTUNGEN SOWIE SPEICHERMEDIUM
PROCÉDÉS ET DISPOSITIFS D'OBTENTION ET DE NOTIFICATION DE PARAMÈTRE, ET SUPPORT DE STOCKAGE

(30) Priority: 28.09.2016 CN 201610866890
(43) Date of publication of application: 15.05.2019
(73) Proprietor: ZTE Corporation, Shenzhen, Guangdong 518057 (CN)
(72) Inventor: PENG, Shaofu, Shenzhen Guangdong 518057 (CN); JIN, Feicai, Shenzhen Guangdong 518057 (CN); CHEN, Ran, Shenzhen Guangdong 518057 (CN)
(74) Representative: Ipsilon
(86) International application number: PCT/CN2017/102525
(87) International publication number: WO 2018/059290

(56) References cited:
- WO-A1-2013/045083
- US-A1- 2012 039 164
- US-A1- 2015 207 671
- US-B1- 8 861 340
- ATLAS A ET AL: "An Architecture for IP/LDP Fast-Reroute Using Maximally Redundant Trees; draft-ietf-rtgwg-mrt-frr-architecture-07.t xt", AN ARCHITECTURE FOR IP/LDP FAST-REROUTE USING MAXIMALLY REDUNDANT TREES; DRAFT-IETF-RTGWG-MRT-FRR-ARCHITECTURE-07.T XT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLA, 15 October 2015 (2015-10-15), pages 1-42, XP015108992, [retrieved on 2015-10-15]
- LI N WU Q ZHAO HUAWEI TECHNOLOGIES A ATLAS C BOWERS JUNIPER NETWORKS J TANTSURA INDIVIDUAL Z: "Intermediate System to Intermediate System (IS-IS) Extensions for Maximally Redundant Trees (MRT); draft-ietf-isis-mrt-02.txt", INTERMEDIATE SYSTEM TO INTERMEDIATE SYSTEM (IS-IS) EXTENSIONS FOR MAXIMALLY REDUNDANT TREES (MRT); DRAFT-IETF-ISIS-MRT-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, S, 18 May 2016 (2016-05-18), pages 1-14, XP015113125, [retrieved on 2016-05-18]
- SHAOFU PENG RAN CHEN ZTE CORPORATION: "Maximally Redundant Trees Fast Reroute using Segment Routing; draft-peng-rtgwg-mrt-frr-sr-00.txt", MAXIMALLY REDUNDANT TREES FAST REROUTE USING SEGMENT ROUTING; DRAFT-PENG-RTGWG-MRT-FRR-SR-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 29 August 2016 (2016-08-29), pages 1-27, XP015115052, [retrieved on 2016-08-29]

## Description

### TECHNICAL FIELD

The disclosure relates to the field of communications, and in particular to parameter notification and obtaining methods and devices, and storage medium.

### BACKGROUND

The Maximally Redundant Trees (abbreviated as MRT) Fast Re-Route (abbreviated as FRR), as a new FRR technology, can protect from a single-point link failure or a node failure using two forwarding topologies having different forwarding limits.

In the MRT architecture, two forwarding mechanisms are defined, which includes a Label Distribution Protocol (abbreviated as LDP) forwarding mechanism and an Internet Protocol tunnel (IP-tunnel) forwarding mechanism.

In the LDP forwarding mechanism, different labels are used to distinguish between a default topology forwarding behavior and an MRT forwarding behavior, and thus the forwarding plane can support the MRT-FRR without upgrade.

In the IP-tunnel forwarding mechanism, a dedicated MRT local loopback interface address is used for supporting forwarding, and similarly the forwarding plane can support the MRT-FRR without upgrade.

A default MRT profile is defined in the existing MRT architecture (RFC7821), in which the LDP forwarding mechanism is used, and no other MRT profile is defined yet.

How to extend the intermediate system to intermediate system (abbreviated as ISIS) and the open shortest path first (abbreviated as OSPF) protocol to notify MRT capability has been described in the draft made by the current Internet Engineering Task Force (abbreviated as IETF), in which, however, a non-default MRT profile is not effectively notified. For the above problem in the related art, no effective solution is provided yet. Further, how to notify the non-default MRT profile will directly affect the subsequent communication and communication quality.

ATLAS A ET AL: "An Architecture for IP/LDP Fast-Reroute Using Maximally Redundant Tree", XP015108992, disclose supports for a specific MRT profile. In this document, all routers in an MRT Island support the same MRT profile, a router advertises support for a given MRT profile using the IGP extensions and a given router can support multiple MRT profiles and participates in multiple MRT Islands. Also, the document defines the options that make up an MRT profile and the default MRT profile.

LI N WU Q ZHAO HUAWEI TECHNOLOGIES A ATLAS C BOWERS JUNIPER NETWORKS J TANTSURA INDIVIDUAL Z: "Intermediate System to Intermediate System (IS-IS) Extensions for Maximally Redundant Tree (MRT)", XP015113125, describes extensions to IS-IS to support the distributed computation of MRT. According to this document, different MRT profiles can be defined to support different uses and to allow transition of capabilities.

### SUMMARY

The present invention is disclosed in the independent claims. The dependent claims define particular embodiments of the invention.

A method for notifying a parameter, a method for acquiring a parameter, a device for notifying a parameter and a device for acquiring a parameter are provided according to the embodiments of the disclosure, to at least solve the problem in the related art that a part of information on MRT capability cannot be notified.

According to an embodiment of the disclosure, a method for notifying a parameter is provided, which includes: a first node determines a parameter contained in a non-default MRT profile, wherein the non-default MRT Profile is an MRT profile other than a default MRT Profile and the parameter contained in the non-default MRT Profile at least include information on MRT capability; and the first node carries the non-default MRT Profile in an extended field of extended Internal Gateway Protocol (IGP) and notifies a second node of the parameter contained in the non-default MRT profile through the extended IGP.

According to another embodiment of the disclosure, a method for acquiring a parameter is provided, which includes: a second node acquires a parameter contained in a non-default MRT profile carried by a first node in an extended field of extended IGP, and notified through extended IGP, wherein the non-default MRT Profile is an MRT profile other than a default MRT Profile and the parameter contained in the non-default MRT Profile at least include information on MRT capability.

According to another embodiment of the disclosure, a device for notifying a parameter is further provided, the device is applied to a first node and includes: a determining module arranged to determine a parameter contained in a non-default MRT profile; and a notifying module arranged to notify a second node of the parameter contained in the non-default MRT profile through extended IGP.

According to yet another embodiment, a storage medium is further provided. The storage medium is arranged to store computer-executable instructions such as program codes. When being executed, the computer-executable instructions can implement the method for notifying a parameter according to the above one or more technical solutions.

With the disclosure, the parameter contained in the non-default MRT profile is notified through the extended IGP, and the parameter contained in the non-default MRT profile is used to describe the MRT capability, thereby solving the problem in the related art that a part of information on MRT capability cannot be notified, and notifying all of information on MRT capability.

### BRIEF DESCRIPTION OF DRAWINGS

The disclosure is further understood with reference to the accompanying drawings described here which constitutes a part of the disclosure. The schematic embodiment of the disclosure and the description thereof are used to interpret the disclosure, and does not limit the disclosure improperly, in the accompanying drawings:
FIG. 1 is a flowchart of a method for notifying a parameter(s) according to an embodiment of the disclosure.
FIG. 2 is a flowchart of a method for notifying a parameter(s) according to an embodiment of the disclosure.
FIG. 3 is a flowchart of transferring MRT capability according to an embodiment of the disclosure.
FIG. 4 is a schematic diagram showing the format of MRT Profile TLV in extended ISIS and extended OSPF for notifying MRT capability according to an embodiment of the disclosure;
FIG. 5 is a schematic diagram showing the format of MRT scoped information sub-TLV according to an embodiment of the disclosure.
FIG. 6 is a schematic diagram showing a network topology according to an optional embodiment of the disclosure.
FIG. 7 is a structural block diagram of a device for notifying a parameter(s) according to an embodiment of the disclosure.
FIG. 8 is a structural block diagram of a device for acquiring a parameter(s) according to an embodiment of the disclosure.
FIG. 9 is a preferred structural block diagram of a device for acquiring a parameter(s) according to an embodiment of the disclosure.

### DETAILED DESCRIPTION

The disclosure is described in detail below in conjunction with the embodiments with reference to the accompanying drawings. It should be illustrated that the embodiments of the disclosure and the characteristics in the embodiments may be combined with each other without conflict. It should be understood that the preferred embodiments described below are used for only illustrating and interpreting the disclosure rather than limiting the disclosure.

It should be illustrated that, the terms such as "first", "second" in the specification, the claims and the above accompanying drawings of the disclosure are used for distinguishing similar objects, rather than describing a specific sequence or an order.

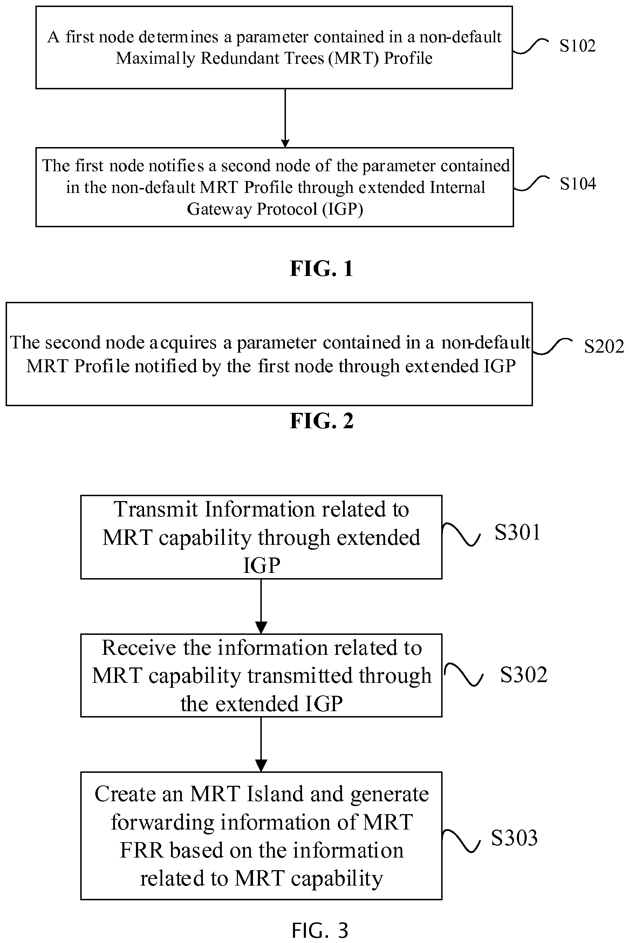

A method for notifying a parameter(s) is provided according to the embodiment. FIG. 1 is a flowchart of a method for notifying a parameter(s) according to an embodiment of the disclosure, as shown in FIG. 1, the flow includes the following steps.

At S102, a first node determines a parameter(s) contained in a non-default MRT Profile, wherein the non-default MRT Profile is an MRT profile other than a default MRT Profile and the parameter(s) contained in the non-default MRT Profile at least include information on MRT capability.

At S104, the above first node carries the non-default MRT Profile in an extended field of extended IGP and notifies a second node of the above parameter(s) contained in the non-default MRT Profile through extended IGP.

With the above steps, the parameter(s) contained in the non-default MRT Profile is notified through the extended IGP, and the parameter(s) contained in the non-default MRT Profile is used to describe MRT capability. Therefore, the problem in the related art that a part of information on MRT capability cannot be notified can be solved, and all of information on MRT capability can be notified.

In the embodiment of the disclosure, the first node may determine the parameter(s) contained in the non-default MRT Profile, and transmit the parameter to the second node through an extended IGP-based message.

In the embodiment of the disclosure, if the default Maximally Redundant Trees Profile, that is, the default MRT profile, is the first type of MRT profile, the non-default MRT Profile is an MRT profile other than the default MRT Profile, and may be referred to as the second type of MRT profile.

In the embodiment, S104 may include that, the first node transmits the second type of MRT profile to the second node. When the first node transmits the second type of MRT profile, a parameter(s) contained in the second type of MRT profile may be carried in an extended field of the extended IGP, to be transmitted to the second node. In this case, the second node may simply analyze and recognize the parameter(s) in the second type of MRT profile transmitted by the first node using the IGP. The parameter(s) contained in the second type of MRT profile may include information on MRT capability. In addition to the information on MRT capability, the parameter(s) may include other information related to communication.

The above parameter(s) contained in the non-default MRT profile may also be referred to as MRT capability information. The notification may include one or more encapsulations which are encapsulated into the Type Length Value (TLV) format, or into other format available for recognizing the above parameter. In the embodiment of the disclosure, the "Type" is a type field, which may be used to carry a parameter type of the parameter contained in the non-default MRT Profile. The "Length" corresponds to the length of a message, which may be the total number of bytes of a message for carrying the parameter contained in the non-default MRT Profile. The "Value" field may be a field for carrying the parameter(s) contained in the non-default MRT Profile.

The parameter(s) contained in the non-default MRT Profile may be encapsulated into the TLV format, to form a message. The message is transmitted between the first node and the second node, and the first node and the second node may encode and decode the message based on the IGP.

In some embodiments, S104 may include: the parameter(s) contained in the non-default MRT Profile is/are carried in the extended field of the IGP; and the message carrying the extended field of IGP is transmitted to the second node.

In an optional embodiment, the above second node is an IGP neighboring node in the same area or level as the first node. That is, the first node may notify the IGP neighbor, which is in the same area or level as the first node, of the above parameter contained in the non-default MRT Profile through the extended IGP. The neighbor may be a node adjacent to the first node, for example, a node which establishes a direct connection with the first node, to implement notifying of the MRT capability information between the adjacent nodes. In implementation, the second node is not limited to be the neighboring node of the first node.

The non-default MRT Profile contains more parameters than the default MRT Profile. For example, as compared to the default MRT Profile, an MRT loopback address dedicated to an MRT-Blue topology or an MRT-Red topology may be additionally defined in the MRT Profile in which the IP-tunnel forwarding mechanism is used, and there is no mechanism which describes how to notify the dedicated MRT loopback address in the existing draft. For another example, as compared to the default MRT Profile, a segment routing global block (abbreviated as SRGB) or a prefix segment-ID (abbreviated as prefix-sid) dedicated to the MRT-Blue topology or the MRT-Red topology may be additionally defined in the MRT Profile in which the segment routing forwarding mechanism is used, and there is no mechanism which describes how to notify the dedicated SRGB and the dedicated prefix-sid in the existing draft. In the following embodiment, the above parameter(s) contained in the non-default MRT Profile is/are described below with examples. For example, the parameter(s) contained in the non-default MRT Profile include(s) at least one of:
an identifier (MRT Profile ID) of a specific MRT Profile supported by the first node;
a priority (Generalized Almost Directed Acyclic Graph root (GADAD) Priority) involved in selecting a GADAG root in the case that the specific MRT Profile is supported by the first node, herein a GADAG is drawn based on the MRT Island, and each point in the GADAG denotes a node in the MRT Island, the GADAG root is selected based on priorities of the nodes, and the priorities may be preconfigured by a management device;
a loopback address (MRT-Blue loopback address) dedicated to an MRT-Blue topology corresponding to the specific MRT Profile in the case that the specific MRT Profile is supported by the first node;
a loopback address (MRT-Red loopback address) dedicated to an MRT-Red topology corresponding to the specific MRT Profile in the case that the specific MRT Profile is supported by the first node;
an SRGB (MRT-Blue SRGB) dedicated to the MRT-Blue topology corresponding to the specific MRT Profile in the case that the specific MRT Profile is supported by the first node;
an SRGB (MRT-Red SRGB) dedicated to the MRT-Red topology corresponding to the specific MRT Profile in the case that the specific MRT Profile is supported by the first node;
a node-level prefix-sid (MRT-Blue prefix-sid) dedicated to the MRT-Blue topology corresponding to the specific MRT Profile in the case that the specific MRT Profile is supported by the first node; or
a node-level prefix-sid (MRT-Red prefix-sid) dedicated to the MRT-Red topology corresponding to the specific MRT Profile in the case that the specific MRT Profile is supported by the first node.

In the embodiment, in addition to the above parameters, the parameters contained in the non-default MRT Profile may contain other extensible parameter(s).

In the above parameters, the MRT-Blue loopback address, the MRT-Blue SRGB and the MRT-Blue prefix-sid may be information dedicated to the MRT-Blue topology, and the MRT-Red loopback address, the MRT-Red SRGB and the MRT-Red prefix-sid may be information dedicated to the MRT-Red topology.

In an optional embodiment, the above first node notifies the second node of the parameter(s) contained in the non-default MRT Profile through the extended IGP in the following manner.

The above first node notifies the second node of the above parameter(s) contained in the non-default MRT Profile by using one or more encapsulations of type length value (TLV).

In the embodiment, the MRT Profile may selectively contain a part of the above parameters (that is, the MRT capability information). The above parameters may be contained in the same encapsulation of TLV, or in multiple encapsulations of TLV.

A method for notifying a parameter is further provided according to the embodiment. FIG. 2 is a flowchart of a method for notifying a parameter(s) according to an embodiment of the disclosure, as shown in FIG. 2, the flow includes the following steps.

At S202, the second node acquires a parameter(s) contained in a non-default MRT Profile carried by the first node in an extended field of extended Internal Gateway Protocol IGP, and notified through extended IGP, wherein the non-default MRT Profile is an MRT profile other than a default MRT Profile and the parameter contained in the non-default MRT Profile at least include information on MRT capability.

With the above step, the parameter(s) contained in the non-default MRT Profile is/are notified through the extended IGP, and the parameter(s) contained in the non-default MRT Profile may include capability information for describing MRT capability. Therefore, the problem in the related art that a part of information on MRT capability cannot be notified can be solved, and all of the information on MRT capability can be notified.

The above parameter(s) contained in the non-default MRT Profile may be referred to as MRT capability information. The extended IGP may be in the type length value (TLV) format or other format available for recognizing the above parameter.

In an optional embodiment, the second node is an IGP neighboring node in the same area or level as the first node. That is, the first node may notify the IGP neighbor, which is in the same area or level as the first node, of the above parameter(s) contained in the non-default MRT Profile through the extended IGP.

In an optional embodiment, the above parameter(s) contained in the non-default MRT Profile include(s) at least one of: an MRT Profile ID, which is an identifier of a specific MRT Profile supported by the first node; a GADAG Priority, which is a priority involved in selecting a GADAG root in the case that the specific MRT Profile is supported by the first node; an MRT-Blue loopback address, which is a loopback address dedicated to an MRT-Blue topology corresponding to the specific MRT Profile in the case that the specific MRT Profile is supported by the first node; an MRT-Red loopback address, which is a loopback address dedicated to an MRT-Red topology corresponding to the specific MRT Profile in the case that the specific MRT Profile is supported by the first node; an MRT-Blue SRGB, which is an SRGB dedicated to the MRT-Blue topology corresponding to the specific MRT Profile in the case that the specific MRT Profile is supported by the first node; an MRT-Red SRGB, which is an SRGB dedicated to the MRT-Red topology corresponding to the specific MRT Profile in the case that the specific MRT Profile is supported by the first node; an MRT-Blue prefix-sid, which is a node-level prefix-sid dedicated to the MRT-Blue topology corresponding to the specific MRT Profile in the case that the specific MRT Profile is supported by the first node; or an MRT-Red prefix-sid which is a node-level prefix-sid dedicated to the MRT-Red topology corresponding to the specific MRT Profile in the case that the specific MRT Profile is supported by the first node. In the embodiment, in addition to the above parameters, the parameter contained in the non-default MRT Profile may include other extensible parameter. In the above parameters, the MRT-Blue loopback address, the MRT-Blue SRGB and the MRT-Blue prefix-sid may be information dedicated to the MRT-Blue topology, and the MRT-Red loopback address, the MRT-Red SRGB and the MRT-Red prefix-sid may be information dedicated to the MRT-Red topology.

In an optional embodiment, the above second node acquires the parameter(s) contained in the non-default MRT Profile notified by the first node through the extended IGP in the following manner. The above second node acquires the above parameter(s) contained in the non-default MRT Profile notified by the first node through one or more type length value (TLV). In the embodiment, the MRT Profile may selectively contain a part of the above parameters (that is, the MRT capability information). The parameters may be contained in the same TLV, or in multiple TLV.

In an optional embodiment, the above method further includes: the second node creates an MRT Island and calculates forwarding information of MRT FRR based on the parameter(s) contained in the non-default MRT Profile.

In an optional embodiment, the above second node creates the MRT Island and calculates the forwarding information of the MRT FRR based on the parameter(s) contained in the non-default MRT Profile in the following manner.

The above second node determines a set of nodes which are in the same area or level as the second node and support the same MRT Profile ID as the second node based on the parameter(s) contained in the non-default MRT Profile.

The second node creates an MRT Island corresponding to the above supported same MRT Profile ID based on the set of nodes, and calculates forwarding information of MRT FRR to a destination prefix based on the MRT Island. The MRT Island may include the set of nodes which support the same MRT Profile ID. The nodes in the set may be connected directly or may be connected via other node(s) in the set.

In the embodiment, the nodes in the MRT Island may be connected through a bidirectional link having the MRT capability.

In the embodiment of the disclosure, the node (including the first node, the second node and other node described above) may detect a set of nodes which are in the same area or level as the node and support the same MRT Profile ID as the node, and create an MRT Island corresponding to the MRT Profile ID. The node in the MRT Island may calculate forwarding information of MRT FRR to a destination prefix based on the MRT Island. The forwarding information of MRT FRR may be generated based on information dedicated to the MRT-Blue topology and the MRT-Red topology.

With the above embodiment of the disclosure, the information related to MRT capability may be transferred in the network through the extended IGP, and the MRT profiles containing multiple different types of parameters may be notified flexibly in multiple different forwarding mechanisms, to create MRT Islands in different forwarding mechanisms and generate forwarding information of MRT FRR corresponding to the MRT Islands.

The disclosure is described below in conjunction with the embodiments.

### First Embodiment

FIG. 3 is a flowchart of transferring MRT capability according to an embodiment of the disclosure. As shown in FIG. 3, the flow includes the following steps.

At S301, a node (corresponding to the above first node) transmits to an IGP neighboring node in the same area or level as the node through extended IGP, information (corresponding to the above parameter(s) contained in the non-default MRT Profile) on MRT capability, especially, information dedicated to an MRT-Blue topology and an MRT-Red topology.

Herein, an extended field of the IGP may be in the TLV format, or other format available for recognizing the information on MRT capability. In some embodiment, one extended field of the IGP may correspond to one encapsulation of TLV. The type of the extended field, the length of the encapsulation and a parameter value of the parameter are encapsulated in the encapsulation.

Optionally, the above information related to MRT capability includes at least one of:
an MRT Profile ID, which is an identifier of a specific MRT Profile supported by a node;
an GADAG Priority, which is a priority involved in selecting a GADAG root in the case that the specific MRT Profile is supported by the node;
an MRT-Blue loopback address, which is a loopback address dedicated to an MRT-Blue topology corresponding to the specific MRT Profile in the case that the specific MRT Profile is supported by the node;
an MRT-Red loopback address, which is a loopback address dedicated to an MRT-Red topology corresponding to the specific MRT Profile in the case that the specific MRT Profile is supported by the node;
an MRT-Blue SRGB, which is an SRGB dedicated to the MRT-Blue topology corresponding to the specific MRT Profile in the case that the specific MRT Profile is supported by the node;
an MRT-Red SRGB, which is an SRGB dedicated to the MRT-Red topology corresponding to the specific MRT Profile in the case that the specific MRT Profile is supported by the node;
an MRT-Blue prefix-sid, which is a node-level prefix-sid dedicated to the MRT-Blue topology corresponding to the specific MRT Profile in the case that the specific MRT Profile is supported by the node;
an MRT-Red prefix-sid, which is a node-level prefix-sid dedicated to the MRT-Red topology corresponding to the specific MRT Profile in the case that the specific MRT Profile is supported by the node; or
other extensible parameter.

Herein, the MRT-Blue loopback address, the MRT-Blue SRGB and the MRT-Blue prefix-sid may be served as information dedicated to the MRT-Blue topology, and the MRT-Red loopback address, the MRT-Red SRGB and the MRT-Red prefix-sid may be served as information dedicated to the MRT-Red topology.

The MRT Profile may selectively contain a part of the above information on MRT capability. The information on MRT capability may be contained in the same TLV, or in multiple TLV.

At S302, the IGP neighboring node (corresponding to the above second node) receives the information on MRT capability transmitted through the extended IGP, especially the information dedicated to the MRT-Blue topology and the MRT-Red topology.

Herein, the received information on MRT capability includes the MRT Profile ID, the GADAG Priority, the MRT-Blue loopback address, the MRT-Red loopback address, the MRT-Blue SRGB, the MRT-Red SRGB, the MRT-Blue prefix-sid, the MRT-Red prefix-sid and other extensible parameter(s).

At S303, an MRT Island is created and forwarding information of MRT FRR is generated based on the information on MRT capability.

Herein, each node may detect a set of nodes which are in the same area or level as the node and support the same MRT Profile ID as the node, and create an MRT Island corresponding to the MRT Profile ID. The nodes in the MRT Island may be connected through a bidirectional link having MRT capability. The node calculates forwarding information of MRT FRR to a destination prefix based on the MRT Island. The forwarding information of MRT FRR may be generated based on the information dedicated to the MRT-Blue topology and the MRT-Red topology.

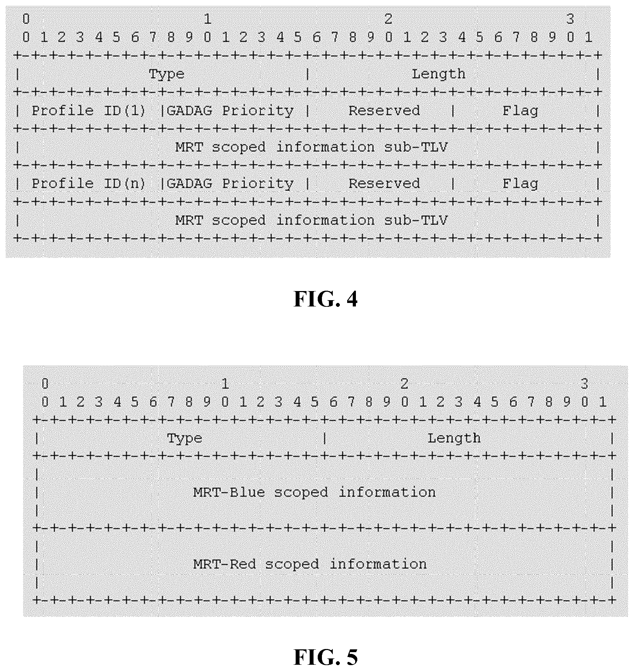

FIG. 4 is a schematic diagram showing a format of MRT Profile TLV in extended ISIS and extended OSPF for notifying MRT capability according to an embodiment of the disclosure. Multiple different types of information on MRT capability can be notified flexibly in the format shown in FIG. 4, which contains parameters for one or more MRT Profile IDs. The parameter for each MRT Profile ID includes Flag which defines a flag bit, Scoped Flag.

In a case that the Scoped Flag is effective, it indicates that the MRT Profile ID further contains a parameter given in MRT scoped information sub-TLV.

Herein, in the ISIS, the MRT Profile TLV is notified together with IS-IS Router CAPABILITY TLV. In the OSPF, the MRT Profile TLV is notified together with OSPF router information LSA.

FIG. 5 is a schematic diagram showing the format of MRT scoped information sub-TLV according to an embodiment of the disclosure, and MRT scoped information sub-TLV is contained in the above MRT Profile TLV. MRT scoped information sub-TLV is used to describe information dedicated to the MRT-Blue topology and the MRT-Red topology. A value and meaning of MRT-Blue scoped information or MRT-Red scoped information vary with a value corresponding to the type.

Herein, in a case that a value corresponding to the type is 1, it indicates that each of the MRT-Blue scoped information and the MRT-Red scoped information is an IPv4 address which occupies four bytes.

In a case that a value corresponding to the type is 2, it indicates that each of the MRT-Blue scoped information and the MRT-Red scoped information is an IPv6 address which occupies sixteen bytes.

In a case that a value corresponding to the type is 3, it indicates that each of the MRT-Blue scoped information and the MRT-Red scoped information is SRGB information which occupies eight bytes, in which, the first four bytes are occupied by Range, and the latter four bytes are occupied by a starting tag.

In a case that a value corresponding to the type is 4, it indicates that the MRT-Blue scoped information together with the MRT-Red scoped information is prefix-sid information which occupies twelve bytes, in which, the first four bytes are occupied by Router-id, and the middle four bytes are occupied by a MRT-Blue prefix-sid, and the latter four bytes are occupied by MRT-Red prefix-sid.

It should be understood that other value(s) may be defined to correspond to the type in practical application, to indicate information having other meaning dedicated to the MRT-Blue topology and the MRT-Red topology.

### Second Embodiment

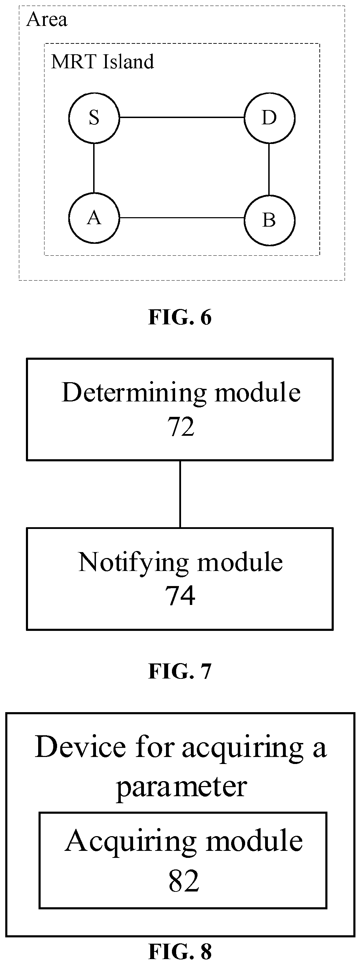

It is described in the embodiment that the MRT Profile in which the IP tunnel forwarding mechanism is used is notified through the extended OSPF to establish an MRT Island corresponding to the MRT Profile. As shown in FIG. 6, the OSPF is run in the network, all nodes are arranged in the same area, and each of the nodes is configured to support a same MRT Profile ID (for example, 1) in which the IP tunnel forwarding mechanism is used, and is configured with other MRT capability parameter(s), especially, a dedicated loopback address in the MRT-Blue topology and the MRT-Red topology related to the MRT Profile.

For example,
for a node S,
   MRT Profile ID: 1
   GADAG Priority: 100
   MRT-Blue loopback address: 1.1.1.9
   MRT-Red loopback address: 1.1.1.10
for a node A:
   MRT Profile ID: 1
   GADAG Priority: 100
   MRT-Blue loopback address: 2.2.2.9
   MRT-Red loopback address: 2.2.2.10
for a node B:
   MRT Profile ID: 1
   GADAG Priority: 100
   MRT-Blue loopback address: 3.3.3.9
   MRT-Red loopback address: 3.3.3.10
for a node D:
   MRT Profile ID: 1
   GADAG Priority: 100
   MRT-Blue loopback address: 4.4.4.9
   MRT-Red loopback address: 4.4.4.10

Each of the nodes makes notification about OSPF router information LSA containing the MRT Profile TLV in the area. The MRT Profile TLV contains the above MRT capability parameter configured for each node. Especially, the MRT Profile TLV contains MRT scoped information sub-TLV. In a case that a value corresponding to the type is 1, the above MRT-Blue loopback address and the above MRT-Red loopback address configured for each node are given.

Each of the nodes senses a set of nodes, which are in the same area as the node and support a same MRT Profile ID 1 as the node, and establishes an MRT Island corresponding to the MRT Profile ID 1. The nodes in the MRT Island are connected through a bidirectional link having the MRT capability. Each of the nodes calculates forwarding information of MRT FRR to each destination prefix based on the MRT Island.

The forwarding information of MRT FRR is generated using the dedicated loopback address in the MRT-Blue topology and the MRT-Red topology. For example, an MRT-Blue backup path from S to D is an IP tunnel with a destination address of 4.4.4.9, and a MRT-Red backup path from S to D is an IP tunnel with a destination address of 4.4.4.10.

### Third Embodiment

It is described in the embodiment that the MRT Profile in which the segment routing forwarding mechanism is used is notified through the extended OSPF to establish an MRT Island corresponding to the MRT Profile. As shown in FIG. 6, the OSPF is run in the network, all nodes are arranged in the same area, and each of the nodes is configured to support a same ID for example 2 of the MRT Profile in which the segment routing forwarding mechanism is used, and is configured with other MRT capability parameter(s), especially, a dedicated SRGB in the MRT-Blue topology and the MRT-Red topology related to the MRT Profile.

For example,
for a node S,
   MRT Profile ID: 2
   GADAG Priority: 100
   MRT-Blue SRGB: [1000∼1999]
   MRT-Red SRGB: [2000∼2999]
for a node A:
   MRT Profile ID: 2
   GADAG Priority: 100
   MRT-Blue SRGB: [1000∼1999]
   MRT-Red SRGB: [2000∼2999]
for a node B:
   MRT Profile ID: 2
   GADAG Priority: 100
   MRT-Blue SRGB: [1000∼1999]
   MRT-Red SRGB: [2000∼2999]
for a node D:
   MRT Profile ID: 2
   GADAG Priority: 100
   MRT-Blue SRGB: [1000∼1999]
   MRT-Red SRGB: [2000∼2999]

Each of the nodes makes notifications about OSPF router information LSA containing the MRT Profile TLV in the area. The MRT Profile TLV contains the above MRT capability parameter configured for each node. Especially, the MRT Profile TLV contains MRT scoped information sub-TLV. In a case that a value corresponding to the type is 3, the above MRT-Blue SRGB and the above MRT-Red SRGB configured for each node are given.

Each of the nodes senses a set of nodes, which are in the same area as the node and support the same MRT Profile ID 2 as the node, and establishes an MRT Island corresponding to the MRT Profile ID 2. The nodes in the MRT Island are connected through a bidirectional link having the MRT capability. Each of the nodes calculates forwarding information of MRT FRR to each destination prefix based on the MRT Island.

The forwarding information of MRT FRR is generated using the dedicated SRGB in the MRT-Blue topology and the MRT-Red topology. For example, an MRT-Blue backup path from S to D may be an SR-LSP, and an SR out label corresponding to the SR-LSP is calculated based on the MRT-Blue SRGB of an MRT-Blue nexthop and a node-sid of the destination node D. An MRT-Red backup path from S to D may be an SR-LSP, and an SR out label corresponding to the SR-LSP may be calculated based on the MRT-Red SRGB of an MRT-Red nexthop and a node-sid of the destination node D.

### Fourth Embodiment

It is described in the embodiment that the MRT Profile in which the segment routing forwarding mechanism is used is notified through the extended OSPF to establish an MRT Island corresponding to the MRT Profile. As shown in FIG. 6, the OSPF is running in the network, all nodes are arranged in the same area, and each of the nodes is configured to support a same MRT Profile ID (for example, 3) the in which the segment routing forwarding mechanism is used, and is configured with other MRT capability parameter(s), especially, a dedicated node-level prefix-sid of the MRT-Blue topology and the MRT-Red topology related to the MRT Profile. The node-level prefix-sid may be also referred to as node-sid.

For example,
for a node S,
   MRT Profile ID: 3
   GADAG Priority: 100
   MRT-Blue node-sid: 100
   MRT-Red node-sid: 101
for a node A:
   MRT Profile ID: 3
   GADAG Priority: 100
   MRT-Blue node-sid: 102
   MRT-Red node-sid: 103
for a node B:
   MRT Profile ID: 3
   GADAG Priority: 100
   MRT-Blue node-sid: 104
   MRT-Red node-sid: 105
for a node D:
   MRT Profile ID: 3
   GADAG Priority: 100
   MRT-Blue node-sid: 106
   MRT-Red node-sid: 107

Each of the nodes notifies of OSPF router information LSA containing the MRT Profile TLV in the area. The MRT Profile TLV contains the above MRT capability parameter configured for each node. Especially, the MRT Profile TLV contains MRT scoped information sub-TLV. In a case that a value corresponding to the type is 4, the above MRT-Blue node-sid and the above MRT-Red node-sid configured for each node are given.

Each of the nodes senses a set of nodes, which are in the same area as the node and support the same MRT Profile ID 3 as the node, and establishes an MRT Island corresponding to the MRT Profile ID 3. The nodes in the MRT Island are connected through a bidirectional link having the MRT capability. Each of the nodes calculates forwarding information of MRT FRR to each destination prefix based on the MRT Island.

The forwarding information of MRT FRR is generated using the dedicated node-sid in the MRT-Blue topology and the MRT-Red topology. For example, an MRT-Blue backup path from S to D may be an SR-LSP, and an SR out label corresponding to the SR-LSP is calculated based on the SRGB of an MRT-Blue nexthop and a MRT-Blue node-sid of the destination node D. An MRT-Red backup path from S to D may be an SR-LSP, and an SR out label corresponding to the SR-LSP may be calculated based on the SRGB of an MRT-Red nexthop and an MRT-Red node-sid of the destination node D.

Based on the description in the above embodiments, it can be clearly understood by those skilled in the art that the method according to the above embodiments may be implemented by means of software together with a necessary general hardware platform, and of course may also be implemented by means of hardware. In many situations, the former case is a better embodiment. Based on such understanding, an essential part of the technical solution according to the disclosure or a part of the technical solution according to the disclosure which contributes to the related art may be embodied in the form of a software product. The computer software product is stored in a storage medium (for example, ROM/RAM, a magnetic disk and an optical disc), and includes multiple instructions to enable a terminal device (which may be a phone, a computer, a server or a network device) to execute the methods according to the embodiments of the disclosure.

A device for notifying a parameter(s) is further provided according to the embodiment. The device is arranged to implement the above embodiments and the preferred embodiments, which are already described and therefore not repeated here anymore. As used below, the term "module" may be implemented as a combination of software and/or hardware having predetermined functions. Although the device described in the following embodiments is preferably implemented with the software, it is possible and conceivable that the device is implemented with hardware or a combination of software and hardware.

FIG. 7 is a structural block diagram of a device for notifying a parameter(s) according to an embodiment of the disclosure. The device may be applied to a first node, and as shown in FIG. 7, includes a determining module 72 and a notifying module 74. The device is described below.

The determining module 72 is arranged to determine a parameter(s) contained in a non-default MRT Profile. The notifying module 74 is connected with the above determining module 72, and is arranged to notify a second node of the parameter(s) contained in the non-default MRT Profile through extended IGP.

In an optional embodiment, the above second node is an IGP neighboring node in the same area or level as the first node.

In an optional embodiment, the above parameter(s) contained in the non-default MRT Profile includes at least one of: an MRT Profile ID, which is an identifier of a specific MRT Profile supported by the first node; a GADAD Priority, which is a priority involved in selecting a GADAG root in the case that the specific MRT Profile is supported by the first node; an MRT-Blue loopback address, which is a loopback address dedicated to an MRT-Blue topology corresponding to the specific MRT Profile in the case that the specific MRT Profile is supported by the first node; an MRT-Red loopback address, which is a loopback address dedicated to an MRT-Red topology corresponding to the specific MRT Profile in the case that the specific MRT Profile is supported by the first node; an MRT-Blue SRGB, which is an SRGB dedicated to the MRT-Blue topology corresponding to the specific MRT Profile in the case that the specific MRT Profile is supported by the first node; an MRT-Red SRGB, which is an SRGB dedicated to the MRT-Red topology corresponding to the specific MRT Profile in the case that the specific MRT Profile is supported by the first node; an MRT-Blue prefix-sid, which is a node-level prefix-sid dedicated to the MRT-Blue topology corresponding to the specific MRT Profile in the case that the specific MRT Profile is supported by the first node; or an MRT-Red prefix-sid which is a node-level prefix-sid dedicated to the MRT-Red topology corresponding to the specific MRT Profile in the case that the specific MRT Profile is supported by the first node.

In an optional embodiment, the above notifying module 74 includes a notifying unit arranged to notify the second node of the above parameter(s) contained in the non-default MRT Profile through one or more TLV.

FIG. 8 is a structural block diagram of a device for acquiring a parameter(s) according to an embodiment of the disclosure. The device may be applied to a second node, and as shown in FIG. 8, includes an acquiring module 82. The device is described below.

The acquiring module 82 is arranged to acquire a parameter(s) contained in a non-default MRT Profile notified by a first node through extended IGP.

In an optional embodiment, the above second node is an IGP neighboring node in the same area or level as the first node.

In an optional embodiment, the above parameter(s) contained in the non-default MRT Profile include(s) at least one of: an MRT Profile ID, which is an identifier of a specific MRT Profile supported by the first node; a GADAD Priority, which is a priority involved in selecting a GADAG root in the case that the specific MRT Profile is supported by the first node; an MRT-Blue loopback address, which is a loopback address dedicated to an MRT-Blue topology corresponding to the specific MRT Profile in the case that the specific MRT Profile is supported by the first node; an MRT-Red loopback address, which is a loopback address dedicated to an MRT-Red topology corresponding to the specific MRT Profile in the case that the specific MRT Profile is supported by the first node; an MRT-Blue SRGB, which is an SRGB dedicated to the MRT-Blue topology corresponding to the specific MRT Profile in the case that the specific MRT Profile is supported by the first node; an MRT-Red SRGB, which is an SRGB dedicated to the MRT-Red topology corresponding to the specific MRT Profile in the case that the specific MRT Profile is supported by the first node; an MRT-Blue prefix-sid, which is a node-level prefix-sid dedicated to the MRT-Blue topology corresponding to the specific MRT Profile in the case that the specific MRT Profile is supported by the first node; or an MRT-Red prefix-sid which is a node-level prefix-sid dedicated to the MRT-Red topology corresponding to the specific MRT Profile in the case that the specific MRT Profile is supported by the first node.

In an optional embodiment, the above acquiring module 82 includes an acquiring unit arranged to acquire the parameter contained in the non-default MRT Profile notified by the first node through one or more TLV.

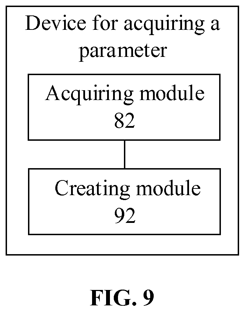

FIG. 9 is a preferred structural block diagram of the device for acquiring a parameter(s) according to an embodiment of the disclosure. As shown in FIG. 9, the device includes a creating module 92 in addition to the module shown in FIG. 8. The device is described below.

The creating module 92 is connected to the above acquiring module 82, and is arranged to create an MRT Island and calculate forwarding information of MRT FRR based on the above parameter(s) contained in the non-default MRT Profile.

In an optional embodiment, the above creating module 92 includes: a determining unit arranged to determine a set of nodes which are in the same area or level as the second node and support the same MRT Profile ID as the second node based on the parameter(s) contained in the non-default MRT Profile; and a creating unit arranged to create an MRT Island corresponding to the above same MRT Profile ID, and calculate forwarding information of MRT FRR to a destination prefix based on the above MRT Island.

It should be illustrated that the above modules may be implemented with software or hardware. For the latter, the above modules may be arranged in the same processor, however, which is not limited thereto. Alternatively, the above modules are arranged in different processors in any combination manner. A computer storage medium is further provided according to an embodiment of the disclosure. Optionally, the above storage medium in the embodiment may be used to store computer executable codes such as program codes for executing the above steps. The computer executable instructions are used for the above one or more methods for notifying the parameter.

Optionally, in the embodiment, the above storage medium may include but is not limited to a U-disk, a read-only memory (ROM), a Random Access Memory (RAM), a mobile hard disk, a magnetic disk, an optical disk, or various mediums for storing the program codes. Optionally, the computer storage medium may be a non-transitory storage medium. The non-transitory storage medium here may be also referred to as a non-volatile storage medium.

Optionally, in the embodiment, the processor executes the above steps based on the program codes stored in the storage medium.

Optionally, for an example in the embodiment, reference may be made to the examples described in the above embodiments and the optional embodiments, which are not described repeatedly in the embodiment anymore.

It can be known from the above embodiments that the method and the device for transferring information on MRT capability described in the embodiments performs notification in an area or level through extended IGP, to transfer the information on MRT capability in a network, and flexibly notify MRT Profiles having multiple different types of parameters in multiple different forwarding mechanisms, thereby establishing an MRT Island in different forwarding mechanisms and generating forwarding information of MRT FRR.

Apparently, it should be understood by those skilled in the art that the above modules and steps in the disclosure may be implemented by a general computing device, and may be integrated in a single computing device or distributed in a network composed of multiple computing devices. Optionally, the modules and steps may be implemented by computing-device-executable program codes. Therefore, the modules and steps may be stored in a storage device and is executed by a computing device. Also, in some cases, the shown or described steps may be executed by a different order from that described here. Alternatively, the modules or steps may be respectively manufactured as integrated circuit modules, or multiple modules or steps may be manufactured as a single integrated circuit module.

### INDUSTRIAL APPLICABILITY

The IGP is extended in the embodiment of the disclosure, and an extended IGP field is added in the IGP. The parameter contained in the non-default MRT Profile is carried by the extended field of IGP, and the parameter is notified to other node(s), to easily realize interaction of the parameter contained in the non-default MRT Profile, thereby ensuring that the parameter contained in the non-default MRT Profile is notified successfully while being compatible with the related art. Therefore, the embodiments of the disclosure have positive industrial effects, and characteristics of simple implementation and great industrial implementation.

## Claims

1. A method for notifying a parameter, **characterized in that** said method comprises:
determining (S102), by a first node, a parameter contained in a non-default Maximally Redundant Trees, MRT, Profile, wherein the non-default MRT Profile is an MRT profile other than a default MRT Profile and the parameter contained in the non-default MRT Profile at least include information on MRT capability; and
carrying (S104), by the first node, the non-default MRT Profile in an extended field of extended Internal Gateway Protocol IGP, and notifying a second node of the parameter contained in the non-default MRT Profile through the extended IGP.

2. The method according to claim 1, wherein,
the second node is an IGP neighboring node in a same area or level as the first node.

3. The method according to claim 1 or 2, wherein the parameter contained in the non-default MRT Profile comprises at least one of:
an MRT Profile ID, which is an identifier of a specific MRT Profile supported by the first node;
a Generalized Almost Directed Acyclic Graph, GADAG, Priority, which is a priority involved in selecting a GADAG root in case that the specific MRT Profile is supported by the first node;
an MRT-Blue loopback address, which is a loopback address dedicated to an MRT-Blue topology corresponding to the specific MRT Profile in the case that the specific MRT Profile is supported by the first node;
an MRT-Red loopback address, which is a loopback address dedicated to an MRT-Red topology corresponding to the specific MRT Profile in the case that the specific MRT Profile is supported by the first node;
an MRT-Blue segment routing global block, SRGB, which is an SRGB dedicated to the MRT-Blue topology corresponding to the specific MRT Profile in the case that the specific MRT Profile is supported by the first node;
an MRT-Red SRGB, which is an SRGB dedicated to the MRT-Red topology corresponding to the specific MRT Profile in the case that the specific MRT Profile is supported by the first node;
an MRT-Blue prefix segment-ID, prefix-sid, which is a node-level prefix-sid dedicated to the MRT-Blue topology corresponding to the specific MRT Profile in the case that the specific MRT Profile is supported by the first node; or
an MRT-Red prefix-sid, which is a node-level prefix-sid dedicated to the MRT-Red topology corresponding to the specific MRT Profile in the case that the specific MRT Profile is supported by the first node.

4. The method according to claim 1, wherein the notifying, by the first node, the second node of the parameter contained in the non-default MRT Profile through the extended IGP comprises:
notifying, by the first node, the second node of the parameter contained in the non-default MRT Profile through one or more type length values, TLVs.

5. A method for acquiring a parameter, **characterized in that** said method comprises:
acquiring (S202), by a second node, a parameter contained in a non-default Maximally Redundant Trees, MRT, Profile carried by a first node in an extended field of extended Internal Gateway Protocol IGP, and notified through the extended IGP, wherein the non-default MRT Profile is an MRT profile other than a default MRT Profile and the parameter contained in the non-default MRT Profile at least include information on MRT capability.

6. The method according to claim 5, wherein,
the second node is an IGP neighboring node in a same area or level as the first node.

7. The method according to claim 5 or 6, wherein the parameter contained in the non-default MRT Profile comprises at least one of:
an MRT Profile ID, which is an identifier of a specific MRT Profile supported by the first node;
a Generalized Almost Directed Acyclic Graph, GADAG, Priority, which is a priority involved in selecting a GADAG root in case that the specific MRT Profile is supported by the first node;
an MRT-Blue loopback address, which is a loopback address dedicated to an MRT-Blue topology corresponding to the specific MRT Profile in the case that the specific MRT Profile is supported by the first node;
an MRT-Red loopback address, which is a loopback address dedicated to an MRT-Red topology corresponding to the specific MRT Profile in the case that the specific MRT Profile is supported by the first node;
an MRT-Blue segment routing global block, SRGB, which is an SRGB dedicated to the MRT-Blue topology corresponding to the specific MRT Profile in the case that the specific MRT Profile is supported by the first node;
an MRT-Red SRGB, which is an SRGB dedicated to the MRT-Red topology corresponding to the specific MRT Profile in the case that the specific MRT Profile is supported by the first node;
an MRT-Blue prefix segment-ID, prefix-sid, which is a node-level prefix-sid dedicated to the MRT-Blue topology corresponding to the specific MRT Profile in the case that the specific MRT Profile is supported by the first node; or
an MRT-Red prefix-sid, which is a node-level prefix-sid dedicated to the MRT-Red topology corresponding to the specific MRT Profile in the case that the specific MRT Profile is supported by the first node.

8. The method according to claim 5, wherein the acquiring, by the second node, a parameter contained in the non-default MRT Profile notified by the first node through extended IGP comprises:
acquiring, by the second node, the parameter contained in the non-default MRT Profile notified by the first node through one or more type length values, TLVs.

9. The method according to claim 5, further comprising:
creating an MRT Island and calculating forwarding information of MRT Fast Re-Router, FRR, by the second node based on the parameter contained in the non-default MRT Profile.

10. The method according to claim 9, wherein the creating the MRT Island and the calculating the forwarding information of MRT FRR by the second node based on the parameter contained in the non-default MRT Profile comprises:
determining, by the second node, a set of nodes which are in a same area or level as the second node and support a same MRT Profile ID as the second node based on the parameter contained in the non-default MRT Profile; and
creating, by the second node, the MRT Island corresponding to the same MRT Profile ID by the second node, and calculating, by the second node, the forwarding information of MRT FRR to a destination prefix based on the MRT Island.

11. A device for notifying a parameter, applied into a first node, **characterized in that** the device comprises:
a processor; and
a memory storing computer executable instructions, which, when executed by the processor, cause the processor to perform the method of any of claims 1 to 4.

12. A device for acquiring a parameter, applied to a second node, **characterized in that** the device comprises:
a processor; and
a memory storing computer executable instructions, which, when executed by the processor, cause the processor to perform the method of any of claims 5 to 10.

13. A computer storage medium in which computer executable instructions are stored, **characterized in that** the computer executable instructions are used to execute the method according to any one of claims 1 to 10.

## Patentansprüche

1. Verfahren zum Benachrichtigen über einen Parameter, **dadurch gekennzeichnet, dass** das Verfahren umfasst:
Bestimmen (S102) eines Parameters, der in einem nicht standardmäßigen Maximal-Redundante-Bäume-(Maximally-Redundant-Trees-), MRT-Profil enthalten ist, durch einen ersten Knoten, wobei das nicht standardmäßige MRT-Profil ein anderes MRT-Profil ist als ein standardmäßiges MRT-Profil und der in dem nicht standardmäßigen MRT-Profil enthaltene Parameter mindestens Informationen zur MRT-Fähigkeit beinhaltet, und
Mitführen (S104) des nicht standardmäßigen MRT-Profils in einem ersten Feld eines erweiterten Internen Gateway-Protokolls (Internal Gateway Protocol) IGP durch den ersten Knoten und Benachrichtigen eines zweiten Knotens über den in dem nicht standardmäßigen MRT-Profil enthaltenen Parameter über das erweiterte IGP.

2. Verfahren nach Anspruch 1, wobei
der zweite Knoten ein IGP-Nachbarknoten in einem gleichen Bereich oder einer gleichen Ebene ist wie der erste Knoten.

3. Verfahren nach Anspruch 1 oder 2, wobei der in dem nicht standardmäßigen MRT-Profil enthaltene Parameter mindestens eines der folgenden umfasst:
eine MRT-Profil-Kennung, die eine Kennung eines von dem ersten Knoten unterstützten spezifischen MRT-Profils ist,
eine Generalisierte-Fast-Gerichtete-Azyklische-Graph-(Generalized-Almost-Directed-Acyclic-Graph-), GADAG-Priorität, die eine Priorität ist, die an der Auswahl einer GADAG-Wurzel beteiligt ist, falls das spezifische MRT-Profil von dem ersten Knoten unterstützt wird,
eine MRT-Blue-Prüfschleifenadresse, die eine Prüfschleifenadresse ist, die einer MRT-Blue-Topologie entsprechend dem spezifischen MRT-Profil fest zugeordnet ist, falls das spezifische MRT-Profil von dem ersten Knoten unterstützt wird,
eine MRT-Red-Prüfschleifenadresse, die eine Prüfschleifenadresse ist, die einer MRT-Red-Topologie entsprechend dem spezifischen MRT-Profil fest zugeordnet ist, falls das spezifische MRT-Profil von dem ersten Knoten unterstützt wird,
einen MRT-Blue-Segment-Routing-Globalblock, SRGB, der ein SRGB ist, welcher der MRT-Blue-Topologie entsprechend dem spezifischen MRT-Profil fest zugeordnet ist, falls das spezifische MRT-Profil von dem ersten Knoten unterstützt wird,
einen MRT-Red-SRGB, der ein SRGB ist, welcher der MRT-Red-Topologie entsprechend dem spezifischen MRT-Profil fest zugeordnet ist, falls das spezifische MRT-Profil von dem ersten Knoten unterstützt wird,
eine MRT-Blue-Präfixsegmentkennung, Prefix-SID, die eine Prefix-SID auf Knotenebene ist, die der MRT-Blue-Topologie entsprechend dem spezifischen MRT-Profil fest zugeordnet ist, falls das spezifische MRT-Profil von dem ersten Knoten unterstützt wird,
eine MRT-Red-Präfixsegmentkennung, Prefix-SID, die eine Prefix-SID auf Knotenebene ist, die der MRT-Red-Topologie entsprechend dem spezifischen MRT-Profil fest zugeordnet ist, falls das spezifische MRT-Profil von dem ersten Knoten unterstützt wird.

4. Verfahren nach Anspruch 1, wobei das Benachrichtigen des zweiten Knotens über den in dem nicht standardmäßigen MRT-Profil enthaltenen Parameter durch den ersten Knoten über das erweiterte IGP umfasst:
Benachrichtigen des zweiten Knotens über den in dem nicht standardmäßigen MRT-Profil enthaltenen Parameter durch den ersten Knoten über einen oder mehrere Typlängenwerte, Type Length Values, TLVs.

5. Verfahren zum Erfassen eines Parameters, **dadurch gekennzeichnet, dass** das Verfahren umfasst:
Erfassen (S202) eines Parameters, der in einem nicht standardmäßigen Maximal-Redundante-Bäume-(Maximally-Redundant-Trees-), MRT-Profil enthalten ist, welches von einem ersten Knoten in einem ersten Feld eines erweiterten Internen Gateway-Protokolls (Internal Gateway Protocol) IGP mitgeführt wird und über das erweiterte IGP mitgeteilt wird, durch einen zweiten Knoten, wobei das nicht standardmäßige MRT-Profil ein anderes MRT-Profil ist als ein standardmäßiges MRT-Profil und der in dem nicht standardmäßigen MRT-Profil enthaltene Parameter mindestens Informationen zur MRT-Fähigkeit beinhaltet.

6. Verfahren nach Anspruch 5, wobei
der zweite Knoten ein IGP-Nachbarknoten in einem gleichen Bereich oder einer gleichen Ebene ist wie der erste Knoten.

7. Verfahren nach Anspruch 5 oder 6, wobei der in dem nicht standardmäßigen MRT-Profil enthaltene Parameter mindestens eines der folgenden umfasst:
eine MRT-Profil-Kennung, die eine Kennung eines von dem ersten Knoten unterstützten spezifischen MRT-Profils ist,
eine Generalisierte-Fast-Gerichtete-Azyklische-Graph- (Generalized-Almost-Directed-Acyclic-Graph-), GADAG-Priorität, die eine Priorität ist, die an der Auswahl einer GADAG-Wurzel beteiligt ist, falls das spezifische MRT-Profil von dem ersten Knoten unterstützt wird,
eine MRT-Blue-Prüfschleifenadresse, die eine Prüfschleifenadresse ist, die einer MRT-Blue-Topologie entsprechend dem spezifischen MRT-Profil fest zugeordnet ist, falls das spezifische MRT-Profil von dem ersten Knoten unterstützt wird,
eine MRT-Red-Prüfschleifenadresse, die eine Prüfschleifenadresse ist, die einer MRT-Red-Topologie entsprechend dem spezifischen MRT-Profil fest zugeordnet ist, falls das spezifische MRT-Profil von dem ersten Knoten unterstützt wird,
einen MRT-Blue-Segment-Routing-Globalblock, SRGB, der ein SRGB ist, welcher der MRT-Blue-Topologie entsprechend dem spezifischen MRT-Profil fest zugeordnet ist, falls das spezifische MRT-Profil von dem ersten Knoten unterstützt wird,
einen MRT-Red-SRGB, der ein SRGB ist, welcher der MRT-Red-Topologie entsprechend dem spezifischen MRT-Profil fest zugeordnet ist, falls das spezifische MRT-Profil von dem ersten Knoten unterstützt wird,
eine MRT-Blue-Präfixsegmentkennung, Prefix-SID, die eine Prefix-SID auf Knotenebene ist, die der MRT-Blue-Topologie entsprechend dem spezifischen MRT-Profil fest zugeordnet ist, falls das spezifische MRT-Profil von dem ersten Knoten unterstützt wird,
eine MRT-Red-Präfixsegmentkennung, Prefix-SID, die eine Prefix-SID auf Knotenebene ist, die der MRT-Red-Topologie entsprechend dem spezifischen MRT-Profil fest zugeordnet ist, falls das spezifische MRT-Profil von dem ersten Knoten unterstützt wird.

8. Verfahren nach Anspruch 5, wobei das Erfassen eines Parameters, der in dem nicht standardmäßigen MRT-Profil enthalten ist und von dem ersten Knoten über erweitertes IGP mitgeteilt wird, durch den zweiten Knoten umfasst:
Erfassen des Parameters, der in dem nicht standardmäßigen MRT-Profil enthalten ist und von dem ersten Knoten über einen oder mehrere Typlängenwerte, Type Length Values, TLVs, mitgeteilt wird, durch den zweiten Knoten.

9. Verfahren nach Anspruch 5, ferner umfassend:
Erstellen einer MRT-Insel (Island) und Berechnen von Weiterleitungsinformationen eines schnellen MRT-Umleiters (MRT Fast Re-Router), MRT-FRR, durch den zweiten Knoten basierend auf dem in dem nicht standardmäßigen MRT-Profil enthaltenen Parameter.

10. Verfahren nach Anspruch 9, wobei das Erstellen der MRT-Insel und das Berechnen der Weiterleitungsinformationen des MRT-FFR durch den zweiten Knoten basierend auf dem in dem nicht standardmäßigen MRT-Profil enthaltenen Parameter umfasst:
Bestimmen eines Satzes von Knoten durch den zweiten Knoten, die in einem gleichen Bereich oder einer gleichen Ebene sind wie der zweite Knoten und eine gleiche MRT-Profilkennung unterstützen wie der zweite Knoten, basierend auf dem in dem nicht standardmäßigen MRT-Profil enthaltenen Parameter und
Erstellen, durch den zweiten Knoten, der MRT-Insel entsprechend der gleichen MRT-Profilkennung durch den zweiten Knoten und Berechnen der Weiterleitungsinformationen des MRT-FFR zu einem Zielpräfix basierend auf der MRT-Insel durch den zweiten Knoten.

11. Vorrichtung zum Mitteilen eines Parameters, angewendet in einem ersten Knoten, **dadurch gekennzeichnet, dass** die Vorrichtung umfasst:
einen Prozessor und
einen Speicher, der computerausführbare Anweisungen speichert, die bei Ausführung durch den Prozessor den Prozessor veranlassen, das Verfahren nach einem der Ansprüche 1 bis 4 durchzuführen.

12. Vorrichtung zum Erfassen eines Parameters, angewendet in einem zweiten Knoten, **dadurch gekennzeichnet, dass** die Vorrichtung umfasst:
einen Prozessor und
einen Speicher, der computerausführbare Anweisungen speichert, die bei Ausführung durch den Prozessor den Prozessor veranlassen, das Verfahren nach einem der Ansprüche 5 bis 10 durchzuführen.

13. Computerspeichermedium, in dem computerausführbare Anweisungen gespeichert sind, **dadurch gekennzeichnet, dass** die computerausführbaren Anweisungen verwendet werden, um das Verfahren nach einem der Ansprüche 1 bis 10 auszuführen.

## Revendications

1. Procédé de notification d'un paramètre, **caractérisé en ce que** ledit procédé comprend les étapes ci-dessous consistant à :
déterminer (S102), par le biais d'un premier nœud, un paramètre contenu dans un profil d'arbres à redondance maximale, MRT, non par défaut, dans lequel le profil d'arbres MRT non par défaut est un profil d'arbres MRT distinct d'un profil d'arbres MRT par défaut, et le paramètre contenu dans le profil d'arbres MRT non par défaut inclut au moins des informations sur une capacité d'arbres MRT ; et
transporter (S104), par le biais du premier nœud, le profil d'arbres MRT non par défaut dans un champ étendu de protocole de passerelle interne, IGP, étendu, et notifier, à un second nœud, le paramètre contenu dans le profil d'arbres MRT non par défaut, à travers le protocole IGP étendu.

2. Procédé selon la revendication 1, dans lequel,
le second nœud est un nœud voisin de protocole IGP dans une même zone ou à un même niveau que le premier nœud.

3. Procédé selon la revendication 1 ou 2, dans lequel le paramètre contenu dans le profil d'arbres MRT non par défaut comprend au moins l'un des éléments parmi :
un identifiant, ID, de profil d'arbres MRT, lequel est un identifiant d'un profil d'arbres MRT spécifique pris en charge par le premier noeud ;
une priorité de graphe acyclique quasi-orienté généralisé, GADAG, laquelle est une priorité impliquée dans la sélection d'une racine de graphe GADAG dans le cas où le profil d'arbres MRT spécifique est pris en charge par le premier noeud ;
une adresse de bouclage de topologie d'arbres MRT-Blue, laquelle est une adresse de bouclage dédiée à une topologie d'arbres MRT-Blue correspondant au profil d'arbres MRT spécifique dans le cas où le profil d'arbres MRT spécifique est pris en charge par le premier nœud ;
une adresse de bouclage de topologie d'arbres MRT-Red, laquelle est une adresse de bouclage dédiée à une topologie d'arbres MRT-Red correspondant au profil d'arbres MRT spécifique dans le cas où le profil d'arbres MRT spécifique est pris en charge par le premier nœud ;
un bloc global de routage de segment MRT-Blue, SRGB, lequel est un bloc SRGB dédié à la topologie d'arbres MRT-Blue correspondant au profil d'arbres MRT spécifique dans le cas où le profil d'arbres MRT spécifique est pris en charge par le premier noeud ;
un bloc SRGB de segment MRT-Red, lequel est un bloc SRGB dédié à la topologie d'arbres MRT-Red correspondant au profil d'arbres MRT spécifique dans le cas où le profil d'arbres MRT spécifique est pris en charge par le premier noeud ;
un identifiant, ID, de segment de préfixe MRT-Blue, « prefix-sid », lequel est un identifiant de segment de préfixe, « prefix-sid », de niveau nœud dédié à la topologie d'arbres MRT-Blue correspondant au profil d'arbres MRT spécifique dans le cas où le profil d'arbres MRT spécifique est pris en charge par le premier noeud ; ou
un identifiant de segment de préfixe, « prefix-sid », MRT-Red, lequel est un identifiant de segment de préfixe, « prefix-sid », de niveau nœud dédié à la topologie d'arbres MRT-Red correspondant au profil d'arbres MRT spécifique dans le cas où le profil d'arbres MRT spécifique est pris en charge par le premier nœud.

4. Procédé selon la revendication 1, dans lequel l'étape de notification, par le premier nœud, au second nœud, du paramètre contenu dans le profil d'arbres MRT non par défaut, par le biais du protocole IGP étendu consiste à :
notifier, par le biais du premier nœud, au second nœud, le paramètre contenu dans le profil d'arbres MRT non par défaut, par le biais d'une ou plusieurs valeurs de longueur type, TLV.

5. Procédé d'acquisition d'un paramètre, **caractérisé en ce que** ledit procédé comprend l'étape ci-dessous consistant à :
acquérir (S202), par le biais d'un second nœud, un paramètre contenu dans un profil d'arbres à redondance maximale, MRT, non par défaut, transporté par un premier nœud dans un champ étendu de protocole de passerelle interne, IGP, étendu, et notifié par le biais du protocole IGP étendu, dans lequel le profil d'arbres MRT non par défaut est un profil d'arbres MRT distinct d'un profil d'arbres MRT par défaut, et le paramètre contenu dans le profil d'arbres MRT non par défaut au moins inclut des informations sur une capacité d'arbres MRT.

6. Procédé selon la revendication 5, dans lequel,
le second nœud est un nœud voisin de protocole IGP dans une même zone ou à un même niveau que le premier nœud.

7. Procédé selon la revendication 5 ou 6, dans lequel le paramètre contenu dans le profil d'arbres MRT non par défaut comprend au moins l'un des éléments parmi :
un identifiant, ID, de profil d'arbres MRT, lequel est un identifiant d'un profil d'arbres MRT spécifique pris en charge par le premier noeud ;
une priorité de graphe acyclique quasi-orienté généralisé, GADAG, laquelle est une priorité impliquée dans la sélection d'une racine de graphe GADAG dans le cas où le profil d'arbres MRT spécifique est pris en charge par le premier noeud ;
une adresse de bouclage de topologie d'arbres MRT-Blue, laquelle est une adresse de bouclage dédiée à une topologie d'arbres MRT-Blue correspondant au profil d'arbres MRT spécifique dans le cas où le profil d'arbres MRT spécifique est pris en charge par le premier nœud ;
une adresse de bouclage de topologie d'arbres MRT-Red, laquelle est une adresse de bouclage dédiée à une topologie d'arbres MRT-Red correspondant au profil d'arbres MRT spécifique dans le cas où le profil d'arbres MRT spécifique est pris en charge par le premier nœud ;
un bloc global de routage de segment MRT-Blue, SRGB, lequel est un bloc SRGB dédié à la topologie d'arbres MRT-Blue correspondant au profil d'arbres MRT spécifique dans le cas où le profil d'arbres MRT spécifique est pris en charge par le premier noeud ;
un bloc SRGB de segment MRT-Red, lequel est un bloc SRGB dédié à la topologie d'arbres MRT-Red correspondant au profil d'arbres MRT spécifique dans le cas où le profil d'arbres MRT spécifique est pris en charge par le premier noeud ;
un identifiant, ID, de segment de préfixe MRT-Blue, « prefix-sid », lequel est un identifiant de segment de préfixe, « prefix-sid », de niveau nœud dédié à la topologie d'arbres MRT-Blue correspondant au profil d'arbres MRT spécifique dans le cas où le profil d'arbres MRT spécifique est pris en charge par le premier noeud ; ou
un identifiant de segment de préfixe, « prefix-sid », MRT-Red, lequel est un identifiant de segment de préfixe, « prefix-sid », de niveau nœud dédié à la topologie d'arbres MRT-Red correspondant au profil d'arbres MRT spécifique dans le cas où le profil d'arbres MRT spécifique est pris en charge par le premier nœud.

8. Procédé selon la revendication 5, dans lequel l'étape d'acquisition, par le biais du second nœud, d'un paramètre contenu dans le profil d'arbres MRT non par défaut notifié par le premier nœud, par le biais du protocole IGP étendu, consiste à :
acquérir, par le biais du second nœud, le paramètre contenu dans le profil d'arbres MRT non par défaut notifié par le premier nœud, par le biais d'une ou plusieurs valeurs de longueur de type, TLV.

9. Procédé selon la revendication 5, comprenant en outre l'étape ci-dessous consistant à :
créer un îlot d'arbres MRT et calculer des informations d'acheminement de mécanisme de réacheminement rapide, FRR, d'arbres MRT, par le biais du second nœud, sur la base du paramètre contenu dans le profil d'arbres MRT non par défaut.

10. Procédé selon la revendication 9, dans lequel l'étape de création de l'îlot d'arbres MRT et de calcul des informations d'acheminement de mécanisme FRR, d'arbres MRT, par le biais du second nœud, sur la base du paramètre contenu dans le profil d'arbres MRT non par défaut, comprend les étapes ci-dessous consistant à :
déterminer, par le biais du second nœud, un ensemble de nœuds qui se situent dans une même zone ou à un même niveau que le second nœud et qui prennent en charge un même identifiant, ID, de profil d'arbres MRT que le second nœud, sur la base du paramètre contenu dans le profil d'arbres MRT non par défaut ; et
créer, par le biais du second nœud, l'îlot d'arbres MRT correspondant au même identifiant, ID, de profil d'arbres MRT que le second nœud, et calculer, par le biais du second nœud, les informations d'acheminement de mécanisme FRR, d'arbres MRT, au niveau d'un préfixe de destination, sur la base de l'îlot d'arbres MRT.

11. Dispositif destiné à notifier un paramètre, appliqué dans un premier nœud, **caractérisé en ce que** le dispositif comprend :
un processeur ; et
une mémoire stockant des instructions exécutables par ordinateur, qui, lorsqu'elles sont exécutées par le processeur, amènent le processeur à mettre en œuvre le procédé selon l'une quelconque des revendications 1 à 4.

12. Dispositif destiné à acquérir un paramètre, appliqué à un second nœud, **caractérisé en ce que** le dispositif comprend :
un processeur ; et
une mémoire stockant des instructions exécutables par ordinateur, qui, lorsqu'elles sont exécutées par le processeur, amènent le processeur à mettre en œuvre le procédé selon l'une quelconque des revendications 5 à 10.

13. Support de stockage informatique dans lequel sont stockées des instructions exécutables par ordinateur, **caractérisé en ce que** les instructions exécutables par ordinateur sont utilisées pour exécuter le procédé selon l'une quelconque des revendications 1 à 10.
